# EUROPEAN PATENT SPECIFICATION

(11) **EP 4 048 089 B1**
(45) Date of publication and mention of the grant of the patent: **11.10.2023**
(21) Application number: 20792429.1
(22) Date of filing: 20.10.2020
(51) Int. Cl.: A23J 3/14, A23L 33/115, A23J 3/22, A23L 33/185

(54) **MINCED MEAT ANALOGUE**
HACKFLEISCHANALOG
ANALOGUE DE VIANDE HACHÉE

(30) Priority: 21.10.2019 EP 19204338; 21.10.2019 EP 19204323; 21.10.2019 EP 19204353; 21.10.2019 EP 19204310
(43) Date of publication of application: 31.08.2022
(73) Proprietor: Unilever IP Holdings B.V., 3013 AL Rotterdam (NL)
(72) Inventor: BOM, Paul, 4824 AV Breda (NL); MELLEMA, Michel, 6708 WH Wageningen (NL); FLENDRIG, Leonardus, Marcus, 6708 WH Wageningen (NL); KOPPERT, Remco, Johannes, 6708 WH Wageningen (NL); HOOS, Peter, Boudewijn, 6708 WH Wageningen (NL)
(74) Representative: Tjon, Hon Kong Guno
(86) International application number: PCT/EP2020/079469
(87) International publication number: WO 2021/078722

(56) References cited:
- EP-A1- 2 689 670
- EP-A1- 3 508 067
- WO-A1-2019/191807
- US-A- 4 376 134
- US-A- 4 495 205
- US-A1- 2005 008 758

## Description

### Field of the invention

The present invention relates to a minced meat analogue, to a method of preparing such a minced meat analogue for consumption and to a process of producing such a meat analogue. Examples of minced meat analogues according to the present invention include vegetarian ground meat as well as vegetarian ground meat formed into patties (e.g. vegetarian hamburgers) or balls (e.g. vegetarian meat balls).

### Background of the invention

A burger (or hamburger) is a cooked patty of minced (or ground) meat, usually beef, that is typically placed inside a sliced bread roll or bun. The patty may be fried or grilled. Hamburgers are often served with cheese, lettuce, tomato, onion, pickles, bacon, or chilli; condiments such as ketchup, mayonnaise, mustard, relish, or "special sauce"; and are frequently placed on sesame seed buns.

Since the term "burger" usually implies beef, for clarity "burger" may be prefixed with the type of meat or meat substitute used, as in beef burger, turkey burger, chicken burger, fish burger or veggie burger.

A veggie burger (or vegetarian burger) is a burger patty that does not contain meat. These burgers may be made from ingredients like beans, especially soybeans and tofu, nuts, grains, seeds, algae or fungi such as mushrooms or mycoprotein.

US 4 376 134 A discloses a process for the production of a low cholesterol uncooked burger analogue, said process consisting essentially of the following steps: 1) formation of an aqueous mixture of flavors, spices, and coloring agents, hereinafter referred to as a flavor solution; 2) addition of textured vegetable protein to the flavor solution, thereby causing hydration of the textured vegetable protein; 3) addition of fibrous food material to the hydrated textured vegetable protein; 4) addition of a liquefied fat and/or oil component to the above mixture; 5) addition of a binder system and browning components; and 6) forming the mixture into patties.

US 4 495 205 A discloses a process for preparing an uncooked meat analogue product comprising (a) combining a thawed hydrated TVP (texturized vegetable protein) with oil and a binder composition comprising 0 to 23% albumin, 0 to 23% soy protein isolate, 0 to 38% vital wheat gluten, and 0 to 16% extruded protein fiber; and (b) forming a mass wherein the combined TVP, oil and binder composition are in intimate admixture.

### Summary of the invention

The inventors have developed a minced meat analogue that can be cooked in the same way as ordinary minced meat to produce a cooked minced meat analogue that in terms of eating quality and appearance is very similar to meat-based reference products. The minced meat analogue of the present invention is easy to manufacture and can be stored in frozen form until it is prepared for consumption.

A first aspect of the invention relates to an uncooked minced meat analogue comprising the following components:
(a) 30-70% by weight of the minced meat analogue of hydrated texturized vegetable protein (TVP) chunks having a weight in the range of 20-800 mg, said hydrated TVP chunks containing, calculated by weight of said hydrated TVP chunks, 58-78 wt.% water, 15-25 wt.% vegetable protein, 1-10 wt.% dietary fiber and 0-3 wt.% fat; wherein said hydrated TVP chunks are obtainable by combining a particulate texturized vegetable protein material with water;
(b) 25-65% by weight of the minced meat analogue of a binder suspension containing the following ingredients:
   (b1) 25-60% by weight of the binder suspension of water (not including water that is contained in the hydrated TVP microfibers);
   (b2) 20-60% by weight of the binder suspension of fat;
   (b3) 0.7-12% by weight of the binder suspension of a heat-gelling binder selected from non-denatured patatin, non-denatured glycinin, non-denatured legumin, non-denatured egg protein, methyl cellulose and combinations thereof; and
   (b4) 3-40% by weight of the binder suspension of hydrated TVP microfibers, whereby preferably said hydrated TVP microfibers are obtainable by soaking dry texturized fibrous vegetable protein (TFVP) material with water and by defibrillating the material to release the hydrated TVP microfibers. said hydrated TVP microfibers containing, calculated by weight of the hydrated TVP microfibers, 40-75 wt.% water and 15-40 wt.% vegetable protein;
   wherein ingredients (b1), (b2), (b3) and (b4) together constitute at least 65 wt.%, preferably at least 75 wt.%, more preferably at least 85 wt.% of the binding suspension;
   wherein components (a) and (b) together constitute at least 75 wt.%, preferably at least 85 wt.%, more preferably at least 90 wt.% of the minced meat analogue.

The minced meat analogue of the present invention comprises hydrated TVP chunks that are held together by a binder suspension that contains water, fat, heat-gelling binder and hydrated TVP microfibres. The binder suspension acts as a lubricant and a glue that allows for the preparation of a coherent dough that can be pumped and/or shaped and does not fall apart during storage, handling and preparation. In addition, the binder suspension has a major impact on the eating quality of the cooked minced meat analogue as it affects important quality attributes such as succulence, bite, elasticity, oily mouthfeel and in-mouth flavour release.

In case the minced meat analogue has been shaped into a patty or a ball, the combination of heat-gelling binder, hydrated TVP microfibres, fat and water in the binder suspension forms a cohesive matrix within the cooked meat analogue product that is believed to have a similar impact on the eating quality of the ready-to-eat product as the juice that is present within ready-to-eat meat-based hamburgers or meat balls.

A second aspect of the invention relates to a method of preparing the aforementioned minced meat analogue for consumption, said method comprising frying or grilling said minced meat analogue.

A third aspect of the invention relates to a process of preparing the aforementioned uncooked minced meat analogue, said process comprising:
(a) combining a texturized fibrous vegetable protein (TFVP) material with water to produce a hydrated TFVP material, followed by processing the hydrated TFVP material in a meat grinder to produce hydrated TVP microfibers;
(b) combining a particulate texturized vegetable protein (TVP) material with water to produce a hydrated TVP chunks;
(c) mixing the hydrated TVP microfibers, the hydrated TVP chunks, water, fat and heat-gelling binder, said heat-gelling binder being selected from non-denatured patatin, non-denatured glycinin, non-denatured legumin, non-denatured egg protein, methyl cellulose and combinations thereof.

### Detailed description of the invention

The words 'comprising' and 'containing' as used herein should not be interpreted restrictively as meaning 'consisting of'. In other words, besides the features listed after these words, non-listed features may be present.

Unless specified otherwise, numerical ranges expressed in the format 'from x to y' or `x-y' are understood to include x and y. When for a specific feature multiple preferred ranges are described in the format 'from x to y' or 'x-y', it is understood that all ranges combining the different endpoints are also contemplated. For the purpose of the invention ambient temperature is defined as a temperature of about 20°C.

Unless indicated otherwise, weight percentages (wt.%) are based on the total weight of the composition. Also, unless indicated otherwise, weight percentages as based on wet weight.

The term "water content" as used herein, unless indicated otherwise, relates to the total water content.

The term "minced meat analogue" as used herein refers to a vegetarian product that has an appearance and structure similar to that of minced meat. More particularly, like minced meat, the minced meat analogue of the present invention is largely (≥ 50 wt.%) composed of small pieces of elastic material that are wetted on the outside by an aqueous liquid. The term "minced meat analogue" also encompasses products shaped from such minced meat analogue, such as patties and balls.

The term "textured or texturized vegetable protein (TVP)" as used herein refers to a food ingredient made from edible protein sources and characterised by having structural integrity and identifiable texture such that each unit will withstand hydration in cooking and other procedures used in preparing the food for consumption. TVP is typically produced by extrusion. The term "TVP material" for the present purposes generally refers to the dry TVP. The term "TVP chunks" and "hydrated TVP chunks" are used interchangeably to refer to hydrated TVP.

Besides the hydrated TVP chunks and the binder suspension the minced meat analogue may contain other ingredients in the form of particulate material having a particle weight of at least 1 mg. Pieces of vegetable or spices are an example of such a particulate material.

The amount of hydrated TVP microfibers in the minced meat analogue is determined by the following procedure:
- Introduce 50 grams of minced meat analogue into a beaker (1 litre PP beaker, BRAND, Germany; height 181 mm, internal diameter bottom 89 mm, internal diameter top 112 mm) together with 1 litre of demi-water after both the minced meat analogue and the water have been equilibrated at 20°C;
- Stir the contents of the beaker with a stirring magnet (length 78mm, triangular with 15mm sides) at 200 rpm using a stirring plate (IKA, type RTC basic, Staufen, Germany);
- After 30 min the stirring is stopped for 1 minute to remove floating fat with a metal tablespoon, and then the stirring is continued.
- After 60 minutes, the stirring is stopped and exactly 10 seconds after the stirring was stopped a glass vial (VWR, Amsterdam, height 76.2 mm, outer diameter 72.2 mm) is fully submerged in the plastic beaker using tweezers and the resulting overflow is collected in the vial until the vial is completely filled (225 ml);
- The collected liquid is poured over a stainless-steel mesh sieve (mesh size: 1 mm), after the weight of the sieve has been determined. Next, the sieve is placed under an angle of 30 degrees to let excess water drip away. After 5 minutes droplets are removed from the metal rim of the sieve with a paper towel and the sieve is weighed again, to determine the weight of fibrous retentate;
- This procedure is repeated 4 times and the average weight is calculated.

The term "non-denatured" as used herein in relation to proteins, refers to proteins that still have the secondary structure which is present in their native state.

The term "dry matter" as used herein refers to the matter that remains after water and other volatile components have been removed by evaporation using a forced-air oven (2 hours at 103°C, or longer if not all moisture has been removed).

The minced meat analogue of the present invention is uncooked. Here "uncooked" means that the complete minced meat analogue, i.e. the minced meat analogue as whole, has not been heated to temperatures in excess of 60°C. Ingredients of the minced meat analogue, such as the TVP chunks, however, may have been heated to temperatures in excess of 60°C during the production thereof.

In another advantageous embodiment, the minced meat analogue is a frozen uncooked minced meat analogue. Most preferably, the minced meat analogue is frozen uncooked minced meat analogue shaped in the form of a patty or a ball. Frozen distribution and storage offers the advantage that, especially when the minced meat analogue is uncooked, the product can be stored for a long time until it is prepared for consumption. The 'meaty' character of the minced meat analogue of the present invention is well retained during frozen storage.

The minced meat analogue the present invention may contain animal products other than meat, such as egg and dairy products. Preferably, however, the minced meat analogue is a vegan product that does not contain any animal products.

According to a preferred embodiment, the minced meat analogue is shaped, e.g. in the form of a patty or a ball.

The shaped minced meat analogue preferably has an open structure, i.e. the interior of the shaped product comprises small spaces that are filled with air. Typically, the shaped minced meat analogue has a density of 0.9 to 1.2 g/L, more preferably a density of 0.95 to 1.15 g/L.

According to a particularly preferred embodiment, the minced meat analogue is shaped in the form of a patty having a weight of 60-200 grams, more preferably of 90-140 grams. Preferably, the patty has an average diameter in the range of 80-150 mm and an average height in the range of 5-15 mm.

The water content of the minced meat analogue typically lies in the range of 50-70%, more preferably in the range of 55-65% by weight of the minced meat analogue.

The protein content of the minced meat analogue preferably lies in the range of 10-20%, more preferably in the range of 12-18% by weight of the minced meat analogue.

Preferably, at least 70 wt.%, more preferably at least 80 wt.% of the total amount of protein of the minced meat analogue is vegetable protein selected from soy protein, legume protein, wheat protein, rice protein and combinations thereof. Examples of legume proteins that can be used include lentil protein, pea protein, faba bean protein, lupin protein and combinations thereof.

According to a particularly preferred embodiment, at least 50 wt.%, more preferably at least 60 wt.% and most preferably at least 75 wt.% of the total amount of protein of the minced meat analogue is soy protein.

The total fat content of the minced meat analogue preferably lies in the range of 8-22%, more preferably in the range of 10-20% by weight of the minced meat analogue.

The total amount of fat contained in the minced meat analogue typically has the following fatty acid composition:
20-40 wt.% palmitic acid;
0-20 wt.% stearic acid;
12-60 wt.% oleic acid;
10-50 wt.% polyunsaturated fatty acid;
wherein the total amount of saturated fatty acids does not exceed 50 wt.%. The fatty acid composition of the fat can be determined using ISO method 12966-4: 2015.

The minced meat analogue preferably contains 1-5%, more preferably 1.5-3.5% by weight of the minced meat analogue of dietary fiber.

Calculated by weight of the dry matter of the minced meat analogue, the minced meat analogue preferably contains 3-15 wt.%, most preferably 4-9 wt.% of dietary fiber.

Carbohydrates are preferably contained in the minced meat analogue in a concentration of 1-8%, more preferably 2-6% by weight of the minced meat analogue of carbohydrates.

Calculated by weight of the dry matter of the minced meat analogue, the minced meat analogue preferably contains 2-20 wt.%, most preferably 4-15 wt.% of carbohydrates.

The starch content of the minced meat analogue, calculated by weight of the dry matter of the minced meat analogue, preferably lies in the range of 2-18 wt.%, more preferably in the range of 3-14 wt.%.

Preferably, the minced meat analogue contains, calculated by weight of the dry matter of the minced meat analogue, 0-4% sugars, most preferably 0-2% sugars.

The minced meat analogue of the present invention preferably contains 0.2-3%, more preferably 0.3-2% salt by weight of the minced meat analogue. Here the term salt refers to sodium chloride, potassium chloride and combinations thereof.

The pH of the minced meat analogue preferably lies in the range of pH 5 to pH 7.5, more preferably in the range of pH 5.8 to pH 6.8.

In a preferred embodiment, the minced meat analogue contains 35-60%, more preferably 36-55% by weight of the minced meat analogue of the hydrated TVP chunks.

The hydrated TVP chunks can be prepared by soaking dry TVP particles with water. Dry TVP particles are commercially available. These dry TVP particles are typically produced by extrusion cooking and drying.

The hydrated TVP chunks in the minced meat analogue typically have a water content of at least 50%, more preferably of 60-78% by weight of the hydrated TVP chunks.

Protein is preferably contained in the hydrated TVP chunks in a concentration, calculated by weight of the dry matter of the hydrated TVP chunks, of at least 50 wt.%, more preferably of at least 60 wt.%, most preferably of at least 62 wt.%.

The hydrated TVP chunks present in the minced meat analogue can have different shapes, such as sphere-like-like and sheet-like.

The hydrated TVP chunks in the minced meat analogue typically contain, calculated by weight of the dry matter of the hydrated TVP chunks, 50-80 wt.% protein, 0-5 wt.% fat and 3-30 wt.% dietary fiber. More preferably, the hydrated TVP chunks in the minced meat analogue contain, calculated by weight of the dry matter of the hydrated TVP chunks, 65-75 wt.% protein, 0.5-4 wt.% fat and 6-24 wt.% dietary fiber.

Preferably, at least 80 wt.%, more preferably at least 90 wt.% of the total amount of protein contained in the hydrated TVP chunks is vegetable protein selected from soy protein, legume protein, wheat protein, rice protein and combinations thereof. Examples of legume proteins that can be used include lentil protein, pea protein, faba bean protein, lupin protein and combinations thereof.

In a more preferred embodiment, at least 80 wt.%, more preferably at least 90 wt.% and most preferably at least 95 wt.% of the total amount of protein of the hydrated TVP chunks is protein selected from soy protein, pea protein, gluten and combinations thereof.

According to a particularly preferred embodiment, at least 70 wt.%, more preferably at least 80 wt.%, most preferably at least 85 wt.% of the total amount of protein of the hydrated TVP chunks is soy protein.

The minced meat analogue preferably comprises 28-62%, more preferably 30-60% and most preferably 35-58% by weight of the minced meat analogue, of the binder suspension containing water, fat, heat-gelling binder and hydrated TVP fibres.

The water content of the binder suspension preferably lies in the range of 22-55%, more preferably in the range of 24-50% by weight of the binder suspension. The water content does not include water contained in the hydrated microfibers.

According to a preferred embodiment, the binder suspension contains 1-15%, more preferably 2-12% and most preferably 3-10% by weight of the binder suspension of a heat-gelling binder selected from non-denatured patatin, non-denatured glycinin, non-denatured legumin, non-denatured egg protein, methyl cellulose and combinations thereof. The application of the heat-gelling binder in the binder suspension offers the advantage that a firm product can be made that will withstand handling, that can easily be shaped/moulded and that provides a pleasant bite upon consumption.

The heat-gelling binder that is contained in the binder suspension advantageously includes methyl cellulose. Preferably, the binder suspension contains 1-12%, more preferably 2-10% and most preferably 3.0-8.0% by weight of the binder suspension of methyl cellulose.

The minced meat analogue preferably contains, calculated by weight of the dry matter of the minced meat analogue, 2.5-10 wt.%, more preferably 3.0-9.0 wt.%, most preferably 5.0-8.0 wt.% of methyl cellulose.

The methyl cellulose employed in accordance with the present invention preferably has a methoxyl content of 20% to 40%, more preferably of 24% to 36%.

In another preferred embodiment, the methyl cellulose employed has a viscosity at a temperature of 20°C and a concentration of 2 wt.% in water of 20,000-1,000,000 cP, more preferably of 30,000-500,000 cP and most preferably of 35,000-200,000 cP.

The molecular weight of the methyl cellulose preferably lies in the range of 100 to 250 kDa, more preferably in the range of 150 to 220 kDa.

According to a preferred embodiment, the methyl cellulose has a gelation temperature of at least 30°C, more preferably a gelation temperature in the range of 35°C to 60°C, most preferably a gelation temperature in the range of 40°C to 50°C.

According to another preferred embodiment, the binder suspension contains 0.3-8%, more preferably 0.5-6% and most preferably 0.6-4% by weight of the binder suspension of non-denatured vegetable protein selected from non-denatured patatin, non-denatured glycinin, non-denatured legumin and combinations thereof.

Methyl cellulose and non-denatured vegetable protein, selected from non-denatured patatin, non-denatured glycinin, non-denatured legumin and combinations thereof, are typically present in the minced meat analogue in a weight ratio of 1:1 to 8:1. More preferably, methyl cellulose and the non-denatured vegetable protein are present in the minced meat analogue in a weight ratio of 3:2 to 6:1.

The fat content of the binder suspension preferably lies in the range of 22-50%, more preferably of 24-50% by weight of the binder suspension.

Together, the water and fat present in the binder suspension preferably constitute at least 50 wt.%, more preferably at least 55 wt.% and most preferably at least 58 wt.% of said binder suspension.

The binder suspension preferably contains 5-30%, more preferably 6-25% and most preferably 7-20% by weight of the binder suspension of the hydrated TVP microfibers.

The hydrated TVP microfibers preferably constitute 2-28 wt.%, preferably 4-25 wt.%, more preferably 5-20 wt.% and most preferably 6-18 wt.% of the vegetarian burger (wet weight).

The hydrated TVP microfibers can be prepared by soaking dry texturized fibrous vegetable protein (TFVP) material with water and by defibrillating the material to release the hydrated TVP microfibers. The term "texturized fibrous vegetable protein material" as used herein refers to pieces of texturized vegetable protein that comprise aligned proteinaceous fibers. Dry TFVP materials are commercially available.

Protein is preferably contained in the hydrated TVP microfibres in a concentration, calculated by weight of the dry matter of the hydrated TVP microfibers, of at least 50 wt.%, more preferably of at least 60 wt.%, most preferably of at least 62 wt.%.

The hydrated TVP microfibers typically contain, calculated by weight of the dry matter of the hydrated TVP microfibers, 50-80 wt.% protein, 0-5 wt.% fat and 3-30 wt.% dietary fiber. More preferably, the hydrated TVP microfibers contain, calculated by weight of the dry matter of the hydrated TVP microfibers, 65-75 wt.% protein, 0-3 wt.% fat and 6-15 wt.% dietary fiber.

Preferably, at least 80 wt.%, more preferably at least 90 wt.% of the total amount of protein of the hydrated TVP microfibers is vegetable protein selected from soy protein, legume protein, wheat protein, rice protein and combinations thereof. Examples of legume proteins that can be used include lentil protein, pea protein, faba bean protein, lupin protein and combinations thereof.

According to a preferred embodiment, the hydrated TVP microfibers contain, calculated by weight of the dry matter contained therein, 70-100 wt.% wt.% soy protein and 0-30 wt.% gluten, more preferably 80-99 soy protein and 1-20 wt.% gluten, more preferably 90-98 soy protein and 2-10 wt.% gluten.

According to another preferred embodiment, the hydrated TVP microfibers contain, calculated by weight of the dry matter contained therein, 0.5-10 wt.% starch, more preferably 1-5 wt.% starch.

Besides hydrated TVP chunks, fat, water, heat-gelling binder and hydrated TVP microfibres, the minced meat analogue of the present invention can contain additional ingredients such as herbs, spices, sugars, flavouring, colouring, emulsifiers, hydrocolloids, vitamins, minerals and combinations thereof.

Preferably, the minced meat analogue comprises added caramelised material selected from caramel, burnt sugar, malt extract and combinations thereof. More preferably, the minced meat analogue comprises 0.01-1%, by weight of the minced meat analogue of the caramelized material.

The term "caramel" as used herein, unless indicated otherwise, refers to a water-soluble food colouring that is made by heating carbohydrates either alone or in the presence of acids, alkalis, and/or salts. Carbohydrates used the commercial production of caramel colouring include fructose, glucose, invert sugar, sucrose, malt syrup, molasses, starch hydrolysates, and fractions thereof. The acids that may be used are sulfuric, sulfurous, phosphoric, acetic, and citric acids; the alkalis are ammonium, sodium, potassium, and calcium hydroxides; and the salts are ammonium, sodium, and potassium carbonate, bicarbonate, phosphate (including mono- and dibasic), sulfate, and bisulfite. Internationally, the United Nations Joint Food and Agriculture Organization/World Health Organization Expert Committee on Food Additives (JECFA) recognizes four classes of caramel colour, differing by the reactants used in their manufacture, each with its own INS and E number:

| Class | INS/E number | Description |
|---|---|---|
| I | 150a / E 150a | Plain caramel |
| II | 150b / E 150b | Caustic sulfite caramel |
| III | 150c / E 150c | Ammonia caramel |
| IV | 150d / E 150d | Sulfite ammonia caramel |

The term "burnt sugar" as used herein refers to caramalised sugar, also known as "caramel sugar", that has been produced by heating sugar without the use of chemical reactants that are used in the production of the above mentioned caramel colourings.

The caramelised material applied in the minced meat analogue preferably is caramel, burnt sugar or a combination thereof. According to a particularly preferred embodiment, the caramel material employed in the binder suspension is burnt sugar. Typically, the burnt sugar has a sugar content of at least 80 wt.%, more preferably of at least 90 wt.%, calculated by weight of the burnt sugar.

According to a particularly preferred embodiment, the minced meat analogue contains vegetable carbon. Here, the term "vegetable carbon" refers to particles of carbonized vegetable material. According to a preferred embodiment, the vegetable carbon is a form of finely divided carbon produced by steam activation of carbonized raw material of vegetable origin that has been assigned E number E 153. Preferably, the minced meat analogue contains 0.01-0.3%, more preferably 0.02-0.2% by weight of the minced meat analogue of vegetable carbon.

According to a particularly preferred embodiment, the vegetable carbon is of the binder suspension.

Preferably, not more than 20 wt.%, more preferably not more than 10 wt.% of the vegetable carbon of the minced meat analogue is contained within the hydrated TVP chunks or the hydrated TVP microfibers.

The vegetable carbon preferably has a particle size distribution, determined by laser diffraction, that meets the following condition: at least 80 wt.% of the carbon particles has a size within the range of 0.5 and 50 µm. Vegetable carbon may suitably be introduced in the form of a suspension.

Another aspect of the invention relates to a method of preparing a minced meat analogue as described herein before for consumption, said method comprising frying or grilling said minced meat analogue.

In accordance with a particularly preferred embodiment, the minced meat analogue is shaped in the form of a patty and is prepared for consumption by frying or grilling the patty to produce a cooked patty and placing the cooked patty inside a cut bun.

Yet another aspect of the invention relates to a process of preparing a minced meat analogue, said process comprising:
(a) combining a texturized fibrous vegetable protein (TFVP) material with water to produce a hydrated TFVP material, followed by processing the hydrated TFVP material in a meat grinder to produce hydrated TVP microfibers;
(b) combining a particulate texturized vegetable protein (TVP) material with water to produce a hydrated TVP chunks;
(c) mixing the hydrated TVP microfibers, the hydrated TVP chunks, water, fat and heat-gelling binder, said heat-gelling binder being selected from non-denatured patatin, non-denatured glycinin, non-denatured legumin, methyl cellulose and combinations thereof.

The term "texturized fibrous vegetable protein material" as used herein refers to pieces of texturized vegetable protein that comprise aligned proteinaceous fibers. The TFVP material is a fibrous composite comprising microfibers that can be hydrated to produce hydrated TVP microfibers as described herein before.

The present process of preparing a minced meat analogue preferably yields a minced meat analogue as described herein before.

In the present process the defibrillated hydrated TFVP material and the hydrated TVP chunks are typically mixed in a weight ratio that lies in the range of 1:3 to 3:1, more preferably in the range of 1:2 to 2:1.

The TFVP material employed in the present method preferably has a water content, calculated by weight of the TFVP material, of not more than 15 wt.%, more preferably of not more than 12 wt.%, most preferably of not more than 10 wt.%.

Protein is preferably contained in the TFVP material in a concentration, calculated by weight of the dry matter of the TFVP material, of at least 50 wt.%, more preferably of at least 60 wt.%, most preferably of at least 62 wt.%.

The TFVP material typically contains, calculated by weight of the dry matter of the TFVP material, 50-80 wt.% protein, 0-5 wt.% fat and 3-30 wt.% dietary fiber. More preferably, the hydrated TFVP material contains, calculated by weight of the dry matter of the TFVP material, 65-75 wt.% protein, 0-3 wt.% fat and 6-15 wt.% dietary fiber.

Preferably, at least 80 wt.%, more preferably at least 90 wt.% of the total amount of protein of the TFVP material is vegetable protein selected from soy protein, legume protein, wheat protein, rice protein and combinations thereof. Examples of legume proteins that can be used include lentil protein, pea protein, faba bean protein, lupin protein and combinations thereof.

Preferably, the TFVP material contains, calculated by weight of the dry matter of the TFVP material, at least 50 wt.% soy protein, more preferably at least 60 wt.% soy protein.

According to a preferred embodiment, the TFVP material contains, calculated by weight of the dry matter of the TFVP material, 70-100 wt.% wt.% soy protein and 0-30 wt.% gluten, more preferably 80-99 soy protein and 1-20 wt.% gluten, more preferably 90-98 soy protein and 2-10 wt.% gluten.

According to another preferred embodiment, the TFVP material contains, calculated by weight of the dry matter of the TFVP material, 0.5-10 wt.% starch, more preferably 1-5 wt.% starch.

The hydrated TFVP material is preferably prepared by mixing 1 part by weight of the TFVP material with 1.5 to 3 parts by weight of water.

The particulate TVP material employed in the present method preferably has a water content, calculated by weight of the TVP material, of not more than 15 wt.%, more preferably of not more than 12 wt.%, most preferably of not more than 10 wt.%.

The particulate TVP material employed in the present process preferably contains, calculated by weight of the dry matter contained therein, 50-80 wt.% protein, 0-5 wt.% fat and 3-30 wt.% dietary fiber. More preferably, the particulate TVP material contains, calculated by weight of the dry matter that is contained therein, 65-75 wt.% protein, 0.5-4 wt.% fat and 6-24 wt.% dietary fiber.

Preferably, at least 80 wt.%, more preferably at least 90 wt.% of the total amount of protein of the particulate TVP material is vegetable protein selected from soy protein, legume protein, wheat protein, rice protein and combinations thereof. Examples of legume proteins that can be used include lentil protein, pea protein, faba bean protein, lupin protein and combinations thereof.

In a more preferred embodiment, at least 80 wt.%, more preferably at least 90 wt.% and most preferably at least 95 wt.% of the total amount of protein of the particulate TVP material is protein selected from soy protein, pea protein, gluten and combinations thereof.

According to a particularly preferred embodiment, at least 70 wt.%, more preferably at least 80 wt.%, most preferably at least 85 wt.% of the the total amount of protein of the particulate TVP material is soy protein.

Preferably, the particulate TVP material contains, calculated by weight of the dry matter of the TVP material, at least 50 wt.% soy protein, more preferably at least 60 wt.% soy protein.

The hydrated TVP chunk is preferably prepared by mixing 1 part by weight of the particulate TVP material with 1.5 to 3 parts by weight of water.

The heat-gelling binder and the fat employed in the present process preferably are as specified herein before.

According to a particularly preferred embodiment, during step (c) of the present process, the ingredients of the patty are kept at a temperature in the range of -5°C to 30°C, more preferably in the range of -3°C to 20°C, most preferably in the range of -2°C to 16°C.

In a preferred embodiment, the mixture obtained in step (c) is frozen and packaged, optionally after having been shaped, e.g. in the form of a patty or a ball.

According to a particularly preferred embodiment, the mixture obtained in step (c) is shaped into patties or balls of 60-200 grams. Preferably, when shaped, the mixture obtained in step (c) has a temperature in the range of -5°C to 20°C, more preferably in the range of -3°C to 15°C, most preferably in the range of -2°C to 12°C.

The present invention is further illustrated by the following non-limiting examples.

### Exam ples

### Example 1

Burgers according to the present invention were prepared on the basis of the recipe shown in Table 1.

**Table 1**

| | Wt.% |
|---|---|
| Solbar Supertex 1050 ¹ | 9.89 |
| TVP Contex 300 ² | 9.25 |
| Methocel Bind 250 ³ | 2.20 |
| Egg protein powder | 1.00 |
| Z-K5000 Rudinblack ⁴ | 0.05 |
| Pepper | 0.20 |
| Salt | 0.40 |
| Caramel sugar NCS23P ⁵ | 0.15 |
| Flavouring | 1.20 |
| JFI Palmstearin 54 LT (MB) ⁶ | 16.00 |
| Water | 59.66 |

| | |
|---|---|
| 1 Textured fibrous vegetable protein; Solbar Ningbo Protein Technology, Ningbo, China (67.5 wt.% protein, 10.9 wt.% fibre, 6.6 wt.% carbohydrate, 0 wt.% fat) 1 Textured fibrous vegetable protein; Solbar Ningbo Protein Technology, Ningbo, China (67.5 wt.% protein, 10.9 wt.% fibre, 6.6 wt.% carbohydrate, 0 wt.% fat) 2 Textured vegetable protein; Solbar Ningbo Protein Technology, Ningbo, China (68 wt.% protein, 8 wt.% moisture) 3 Methyl cellulose; The Dow Chemical Company 4 Vegetable Carbon (E 153); Huijbregts Groep, the Netherlands 5 Huijbregts Groep, the Netherlands 6 Palm stearin powder (melting point 51-55 °C), Juchem Food, Germany | |

### (Remaining ingredients were obtained in Europe)

The burgers were prepared on lab-scale using the following procedure:
- 0.989 kg of Solbar Supertex 1050 was mixed with 2.471 kg tap water (10°C) in a vacuum bag. This pre-determined amount of water is sufficient to fully hydrate the Solbar Supertex 1050. The bag was sealed and stored at 7 °C;
- 0.925 kg of TVP Contex 300 was mixed with 2.35 kg tap water (10°C) and 20% of the vegetable carbon in a vacuum bag. This pre-determined amount of water is sufficient to fully hydrate the TVP Contex 300. The bag was sealed and stored at 7 °C;
- After 1 hour of hydration at 7 °C, the hydrated Solbar Supertex was introduced into a meat grinder using a 8 mm end plate to produce cylindrical strands having a length of 1-2 cm;
- The ground material was combined with the hydrated TVP Contex after the latter ingredient had been hydrated at 7 °C for 30 minutes in a Kenwood mixer. The egg protein powder and the methyl cellulose were added, followed by mixing for 2 minutes at low speed (speed 2);
- The remainder of the water was added, followed by mixing for 20 seconds;
- The remainder of the vegetable carbon and the caramel sugar were added, followed by mixing for 20 seconds;
- Flavouring, spices and salt were added, followed by mixing for 20 seconds;
- Palm stearin powder was added, followed by mixing for 20 seconds;
- The dough mass so prepared was transferred into a bowl and put in a freezer to cool down to 1 °C (in 45 minutes);
- The dough mass was taken out of the freezer, mixed again for 20 seconds and shaped by hand into burger patties having a diameter of 12 cm and a thickness of 1 cm, using a patty shaper';
- The patties so obtained were frozen and stored at -21°C.

The microfibers content of the following two commercially available vegetarian burgers was also determined:
- "Beyond Meat Burger", El Segundo, CA, USA
- "Incredible Burger", Garden Gourmet, Nestlé, Switzerland

Both these commercially available vegetarian burgers contain significantly less than 1 gram of hydrated microfibers per 50g burger.

### Example 2

The burgers of Example 1 were prepared for consumption by pan frying. One table spoon of sunflower oil was added to a 20cm diameter Tefal^{®} Teflon^{®} coated pan, which was placed on a medium heat gas stove to which the burger was added. The burger was pan fried for 4 minutes in total, 2 minutes on each side.

An expert panel (n=3) evaluated the appearance, taste and texture of the freshly prepared vegetarian burgers, using the attributes mentioned in Table 2. The vegan burger of Example 1 was compared to two commercially available vegetarian burgers:
A ("Beyond Meat Burger", El Segundo, CA, USA),
B ("Incredible Burger", Garden Gourmet, Nestlé, Switzerland),

The sensory attributes were scored on a scale of 1 to 5 (1 stands for 'unacceptable' and 5 for 'excellent'). The average and total average scores are listed in Table 2.

**Table 2**

| **Attributes** | **Example 1** | **A** | **B** |
|---|---|---|---|
| Bite | 5.0 | 2.3 | 2.3 |
| Elasticity | 4.0 | 3.7 | 2.7 |
| Juiciness | 3.7 | 4.0 | 3.0 |
| Granularity when chewing | 4.3 | 3.3 | 2.7 |
| Aftertaste/Off-flavour | 3.7 | 3.3 | 1.3 |
| Natural colour | 3.7 | 2.3 | 2.0 |
| Fried appearance | 3.7 | 2.0 | 3.3 |
| **Average score** | **4.0** | **3.0** | **2.5** |
| Natural colour | 3.7 | 2.3 | 2.0 |
| Fried appearance | 3.7 | 2.0 | 3.3 |
| **Average score** | **4.0** | **3.0** | **2.5** |

## Claims

1. An uncooked minced meat analogue comprising the following components:
(a) 30-70% by weight of the minced meat analogue of hydrated texturized vegetable protein (TVP) chunks having a weight in the range of 20-800 mg, said hydrated TVP chunks containing, calculated by weight of said hydrated TVP chunks, 58-78 wt.% water, 15-25 wt.% vegetable protein, 1-10 wt.% dietary fiber and 0-3 wt.% fat; wherein said hydrated TVP chunks are obtainable by combining a particulate texturized vegetable protein material with water;
(b) 25-65% by weight of the minced meat analogue of a binder suspension containing the following ingredients:
(b1) 20-60% by weight of the binder suspension of water;
(b2) 20-60% by weight of the binder suspension of fat;
(b3) 0.7-12% by weight of the binder suspension of a heat-gelling binder selected from non-denatured patatin, non-denatured glycinin, non-denatured legumin, non-denatured egg protein, methyl cellulose and combinations thereof; and
(b4) 3-40% by weight of the binder suspension of hydrated TVP microfibers, whereby said hydrated TVP microfibers are obtainable by soaking dry texturized fibrous vegetable protein (TFVP) material with water and by defibrillating the material to release the hydrated TVP microfibers. said hydrated TVP microfibers containing, calculated by weight of the hydrated TVP microfibers, 40-75 wt.% water and 15-40 wt.% vegetable protein;
wherein ingredients (b1), (b2), (b3) and (b4) together constitute at least 65 wt.% of the binding suspension;
wherein components (a) and (b) together constitute at least 75 wt.% of the minced meat analogue, preferably whereby the minced meat analogue does not contain any animal product.

2. Minced meat analogue according to claim 1, wherein the minced meat analogue contains, calculated by weight of the minced meat analogue, 12-20 wt.% protein, 8-22 wt.% fat and 50-70 wt.% water.

3. Minced meat analogue according to claim 1 or 2, wherein the vegetable protein of the hydrated TVP microfibers contains 70-100 wt.% soy protein and 0-30 wt.% gluten.

4. Minced meat analogue according to claim 3, wherein the vegetable protein of the hydrated TVP microfibers contains 1-20 wt.% gluten.

5. Minced meat analogue according to any one of the preceding claims, wherein the hydrated TVP microfibers contain 0.5-10 wt.%, calculated by weight of the dry matter of the hydrated TVP microfibers, of starch.

6. Minced meat analogue according to any one of the preceding claims, wherein the hydrated TVP microfibers contain, calculated by weight of the dry matter of the hydrated TVP microfibers, 50-80 wt.% protein, 0-5 wt.% fat and 3-30 wt.% dietary fiber, more preferably, the hydrated TVP microfibers contain, calculated by weight of the dry matter of the hydrated TVP microfibers, 65-75 wt.% protein, 0-3 wt.% fat and 6-15 wt.% dietary fiber.

7. Minced meat analogue according to any one of the preceding claims, wherein the binder suspension contains 1-10% by weight of the binder suspension of methyl cellulose.

8. Minced meat analogue according to any one of the preceding claims, wherein the minced meat analogue comprises the following components:
(a) 35-65% by weight of the minced meat analogue of the hydrated TVP chunks;
(b) 30-60% by weight of the minced meat analogue of a binder suspension containing the following ingredients:
(b1) 24-50% by weight of the binder suspension of water;
(b2) 24-60% by weight of the binder suspension of fat;
(b3) 1.5-9% by weight of the binder suspension of methyl cellulose; and
(b4) 10-45% by weight of the binder suspension of the hydrated TVP microfibers;
wherein ingredients (b1), (b2), (b3) and (b4) together constitute at least 85 wt.% of the binding suspension;
wherein components (a) and (b) together constitute at least 90 wt.% of the minced meat analogue.

9. A method of preparing a minced meat analogue according to any one of the preceding claims for consumption, said method comprising frying or grilling said minced meat analogue.

10. A process of preparing an uncooked minced meat analogue according to any one of claims 1 to 8, said process comprising:
(a) combining a texturized fibrous vegetable protein (TFVP) material with water to produce a hydrated TFVP material, followed by processing the hydrated TFVP material in a meat grinder to produce hydrated TVP microfibers;
(b) combining a particulate texturized vegetable protein (TVP) material with water to produce a hydrated TVP chunks;
(c) mixing the hydrated TVP microfibers, the hydrated TVP chunks, water, fat and heat-gelling binder, said heat-gelling binder being selected from non-denatured patatin, non-denatured glycinin, non-denatured legumin, non-denatured egg protein, methyl cellulose and combinations thereof.

11. Process according to claim 10, wherein the process yields a minced meat analogue according to any one of claims 1 to 8.

12. Process according to claim 10 or 11, wherein the TFVP material contains, calculated by weight of the dry matter of the TFVP material, 80-99 wt.% soy protein and 1-20 wt.% gluten.

13. Process according to any one of claims 10-12, wherein the TFVP material contains, calculated by weight of the dry matter of the TFVP material, 0.5-10 wt.% starch.

14. Process according to any one of claims 10-13, wherein the particulate TVP material contains, calculated by weight of the dry matter of the TVP material, at least 50 wt.% of soy protein.

15. Process according to any one of claims 10-14, wherein during step (c) the ingredients of the minced meat analogue are kept at a temperature in the range of - 5°C to 30°C.

## Patentansprüche

1. Ungekochtes Hackfleischanalog, umfassend die folgenden Komponenten:
(a) 30-70 Gew.-% des Hackfleischanalogs hydratisierte texturierte Pflanzenprotein (TVP)-Stücke mit einem Gewicht in dem Bereich von 20-800 mg, wobei die hydratisierten TVP-Stücke, berechnet nach Gewicht der hydratisierten TVP-Stücke, 58-78 Gew.-% Wasser, 15-25 Gew.-% Pflanzenprotein, 1-10 Gew.-% Nahrungsfaser und 0-3 Gew.-% Fett enthalten, wobei die hydratisierten TVP-Stücke durch Kombinieren eines teilchenförmigen texturierten Pflanzenprotein-Materials mit Wasser erhältlich sind;
(b) 25-65 Gew.-% des Hackfleischanalogs einer Bindemittelsuspension, enthaltend die folgenden Zutaten;
(b1) 20-60 Gew.-% der Bindemittelsuspension Wasser;
(b2) 20-60 Gew.-% der Bindemittelsuspension Fett;
(b3) 0,7-12 Gew.-% der Bindemittelsuspension eines wärmegelierenden Bindemittels, ausgewählt unter nicht-denaturiertem Patatin, nicht-denaturiertem Gylcinin, nicht-denaturiertem Legumin, nicht-denaturiertem Eiprotein, Methylcellulose und Kombinationen davon; und
(b4) 3-40 Gew.-% der Bindemittelsuspension hydratisierte TVP-Mikrofasern, wobei die hydratisierten TVP-Mikrofasern erhältlich sind durch Tränken von trockenem texturiertem faserigem Pflanzenprotein (TFVP)-Material mit Wasser und durch Defibrillieren des Materials zur Freisetzung der hydratisierten TVP-Mikrofasern, wobei die hydratisierten TVP-Mikrofasern, berechnet nach Gewicht der hydratisierten TVP-Mikrofasern, 40-75 Gew.-% Wasser und 15-40 Gew.- % Pflanzenprotein enthalten;
wobei die Zutaten (b1), (b2), (b3) und (b4) zusammen mindestens 65 Gew.-% der Bindemittelsuspension ausmachen;
wobei die Komponenten (a) und (b) zusammen mindestens 75 Gew.-% des Hackfleischanalogs ausmachen, wobei das Hackfleischanalog vorzugsweise kein tierisches Produkt enthält.

2. Hackfleischanalog nach Anspruch 1, wobei das Hackfleischanalog, berechnet nach Gewicht des Hackfleischanalogs, 12-20 Gew.-% Protein, 8-22 Gew.-% Fett und 50-70 Gew.-% Wasser enthält.

3. Hackfleischanalog nach Anspruch 1 oder 2, wobei das Pflanzenprotein der hydratisierten TVP-Mikrofasern 70-100 Gew.-% Sojaprotein und 0-30 Gew.-% Gluten enthält.

4. Hackfleischanalog nach Anspruch 3, wobei das Pflanzenprotein der hydratisierten TVP-Mikrofasern 1-20 Gew.-% Gluten enthält.

5. Hackfleischanalog nach irgendeinem der vorhergehenden Ansprüche, wobei die hydratisierten TVP-Mikrofasern 0,5-10 Gew.-% Stärke, berechnet nach Gewicht der Trockenmasse der hydratisierten TVP-Mikrofasern, enthalten.

6. Hackfleischanalog nach irgendeinem der vorhergehenden Ansprüche, wobei die hydratisierten TVP-Mikrofasern, berechnet nach Gewicht der Trockenmasse der hydratisierten TVP-Mikrofasern, 50-80 Gew.-% Protein, 0-5 Gew.-% Fett und 3-30 Gew.-% Nahrungsfasern enthalten, wobei die hydratisierten TVP-Mikrofasern, berechnet nach Gewicht der Trockenmasse der hydratisierten TVP-Mikrofasern, besonders bevorzugt 65-75 Gew.-% Protein, 0-3 Gew.-% Fett und 6-15 Gew.-% Nahrungsfasern enthalten.

7. Hackfleischanalog nach irgendeinem der vorhergehenden Ansprüche, wobei die Bindemittelsuspension 1-10 Gew.-% der Bindemittelsuspension Methylcellulose enthält.

8. Hackfleischanalog nach irgendeinem der vorhergehenden Ansprüche, wobei das Hackfleischanalog die folgenden Komponenten umfasst:
(a) 35-65 Gew.-% des Hackfleischanalogs der hydratisierten TVP-Stücke;
(b) 30-60 Gew.-% des Hackfleischanalogs einer Bindemittelsuspension, enthaltend die folgenden Zutaten:
(b1) 24-50 Gew.-% der Bindemittelsuspension Wasser;
(b2) 24-60 Gew.-% der Bindemittelsuspension Fett;
(b3) 1,5-9 Gew.-% der Bindemittelsuspension Methylcellulose; und
(b4) 10-45 Gew.-% der Bindemittelsuspension der hydratisierten TVP-Mikrofasern;
wobei die Zutaten (b1), (b2), (b3) und (b4) zusammen mindestens 85 Gew.-% der Bindemittelsuspension ausmachen;
wobei die Komponenten (a) und (b) zusammen mindestens 90 Gew.-% des Hackfleischanalogs ausmachen.

9. Verfahren zur Herstellung eines Hackfleischanalogs nach irgendeinem der vorhergehenden Ansprüche zum Verzehr, wobei das Verfahren das Braten und das Grillen des Hackfleischanalogs umfasst.

10. Verfahren zur Herstellung eines ungekochten Hackfleischanalogs nach irgendeinem der Ansprüche 1 bis 8, wobei das Verfahren umfasst:
(a) Kombinieren eines texturierten faserförmigen Pflanzenprotein (TFVP)-Materials mit Wasser, um ein hydratisiertes TFVP-Material herzustellen, gefolgt von der Verarbeitung des hydratisierten TFVP-Materials in einem Fleischwolf, um hydratisierte TVP-Mikrofasern herzustellen.
(b) Kombinieren eines teilchenförmigen texturierten Pflanzenproteins (TVP)-Materials mit Wasser, um hydratisierte TVP-Stücke herzustellen;
(c) Mischen der hydratisierten TVP-Mikrofasern, der hydratisierten TVP-Stücke, des Wassers, des Fetts und des wärmegelierenden Bindemittels, wobei das wärmegelierende Bindemittel aus nicht-denaturiertem Patatin, nicht-denaturiertem Glycinin, nicht-denaturiertem Legumin, nicht-denaturiertem Eiprotein, Methylcellulose und Kombinationen davon ausgewählt ist.

11. Verfahren nach Anspruch 10, wobei das Verfahren ein Hackfleischanalog nach irgendeinem der Ansprüche 1 bis 8 liefert.

12. Verfahren nach Anspruch 10 oder 11, wobei das TFVP-Material, berechnet nach Gewicht der Trockenmasse des TFVP-Materials, 80-99 Gew.-% Sojaprotein und 1-20 Gew.-% Gluten enthält.

13. Verfahren nach irgendeinem der Ansprüche 10-12, wobei das TFVP-Material, berechnet nach Gewicht der Trockenmasse des TFVP-Materials, 0,5-10 Gew.-% Stärke enthält.

14. Verfahren nach irgendeinem der Ansprüche 10-13, wobei das teilchenförmige TVP-Material, berechnet nach Gewicht der Trockenmasse des TVP-Materials, mindestens 50 Gew.-% Sojaprotein enthält.

15. Verfahren nach irgendeinem der Ansprüche 10-14, wobei während des Schritts (c) die Zutaten des Hackfleischanalogs auf einer Temperatur in dem Bereich von -5°C bis 30°C gehalten werden.

## Revendications

1. Analogue de viande hachée crue comprenant les constituants suivants :
(a) 30-70 % en masse de l'analogue de viande hachée de morceaux de protéine végétale texturée hydratée (TVP) ayant une masse dans l'intervalle de 20-800 mg, lesdits morceaux de TVP hydratée contenant, calculé en masse desdits morceaux de TVP hydratée, 58-78 % en masse d'eau, 15-25 % en masse de protéine végétale, 1-10 % en masse de fibre diététique et 0-3 % en masse de graisse ; dans lequel lesdits morceaux de TVP hydratée peuvent être obtenus en combinant une matière de protéine végétale texturée particulaire avec de l'eau ;
(b) 25-65 % en masse de l'analogue de viande hachée d'une suspension de liant contenant les ingrédients suivants :
(b1) 20-60 % en masse de la suspension de liant d'eau ;
(b2) 20-60 % en masse de la suspension de liant de graisse ;
(b3) 0,7-12 % en masse de la suspension de liant d'un liant gélifiant à la chaleur choisi parmi de la patatine non-dénaturée, glycinine non-dénaturée, légumine non-dénaturée, protéine d'oeuf non-dénaturée, méthylcellulose et combinaisons de celles-ci ; et
(b4) 3-40 % en masse de la suspension de liant de microfibres de TVP hydratée, sur quoi lesdites microfibres de TVP hydratée peuvent être obtenues par immersion de matière de protéine végétale fibreuse texturée (TFVP) avec de l'eau et par défibrillation de la matière pour libérer les microfibres de TVP hydratée, lesdites microfibres de TVP hydratée contenant, calculé en masse des microfibres de TVP hydratée, 40-75 % en masse d'eau et 15-40 % en masse de protéine végétale ;
dans lequel les ingrédients (b1), (b2), (b3) et (b4) constituent ensemble au moins 65 % en masse de la suspension de liant ;
dans lequel les constituants (a) et (b) constituent ensemble au moins 75 % en masse de l'analogue de viande hachée, de préférence sur quoi l'analogue de viande hachée ne contient pas de produit animal.

2. Analogue de viande hachée selon la revendication 1, dans lequel l'analogue de viande hachée contient, calculé en masse de l'analogue de viande hachée, 12-20 % en masse de protéine, 8-22 % en masse de graisse et 50-70 % en masse d'eau.

3. Analogue de viande hachée selon la revendication 1 ou 2, dans lequel la protéine végétale des microfibres de TVP hydratée contient 70-100 % en masse de protéine de soja et 0-30 % en masse de gluten.

4. Analogue de viande hachée selon la revendication 3, dans lequel la protéine végétale des microfibres de TVP hydratée contient 1-20 % en masse de gluten.

5. Analogue de viande hachée selon l'une quelconque des revendications précédentes, dans lequel les microfibres de TVP hydratée contiennent 0,5-10 % en masse, calculé en masse de la matière sèche des microfibres de TVP hydratée, d'amidon.

6. Analogue de viande hachée selon l'une quelconque des revendications précédentes, dans lequel les microfibres de TVP hydratée contiennent, calculé en masse de la matière sèche des microfibres de TVP hydratée, 50-80 % en masse de protéine, 0-5 % en masse de graisse et 3-30 % en masse de fibre diététique, encore mieux, les microfibres de TVP hydratée contiennent, calculé en masse de la matière sèche des microfibres de TVP hydratée, 65-75 % en masse de protéine, 0-3 % en masse de graisse et 6-15 % en masse de fibre diététique.

7. Analogue de viande hachée selon l'une quelconque des revendications précédentes, dans lequel la suspension de liant contient 1-10 % en masse de la suspension de liant de méthylcellulose.

8. Analogue de viande hachée selon l'une quelconque des revendications précédentes, dans lequel l'analogue de viande hachée contient les constituants suivants :
(a) 35-65 % en masse de l'analogue de viande hachée de morceaux de TVP hydratée ;
(b) 30-60 % en masse de l'analogue de viande hachée d'une suspension de liant contenant les ingrédients suivants :
(b1) 24-50 % en masse de la suspension de liant d'eau ;
(b2) 24-60 % en masse de la suspension de liant de graisse ;
(b3) 1,5-9 % en masse de la suspension de liant de méthylcellulose ; et
(b4) 10-45 % en masse de la suspension de liant des microfibres de TVP hydratée ;
dans lequel les ingrédients (b1), (b2), (b3) et (b4) constituent ensemble au moins 85 % en masse de la suspension de liant ;
dans lequel les constituants (a) et (b) constituent ensemble au moins 90 % en masse de l'analogue de viande hachée.

9. Procédé de préparation d'un analogue de viande hachée selon l'une quelconque des revendications précédentes pour la consommation, ledit procédé comprenant la friture ou le grill dudit analogue de viande hachée.

10. Procédé de préparation d'un analogue de viande hachée crue selon l'une quelconque des revendications 1 à 8, ledit procédé comprenant :
(a) la combinaison d'une matière de protéine végétale fibreuse texturée (TFVP) avec de l'eau pour produire une matière de TFVP hydratée, suivie par le traitement de la matière de TFVP hydratée dans un hachoir pour produire des microfibres de TVP hydratée ;
(b) la combinaison d'une matière de protéine végétale texturée particulaire (TVP) avec de l'eau pour produire des morceaux de TVP hydratée ;
(c) le mélange des microfibres de TVP hydratée, des morceaux de TVP hydratée, d'eau, de graisse et de liant gélifiant à la chaleur, ledit liant gélifiant à la chaleur étant choisi parmi de la patatine non-dénaturée, glycinine non-dénaturée, légumine non-dénaturée, protéine d'oeuf non-dénaturée, méthylcellulose et combinaisons de celles-ci.

11. Procédé selon la revendication 10, dans lequel le procédé produit un analogue de viande hachée selon l'une quelconque des revendications 1 à 8.

12. Procédé selon la revendication 10 ou 11, dans lequel la matière de TFVP contient, calculé en masse de la matière sèche de la matière de TFVP, 80-99 % en masse de protéine de soja et 1-20 % en masse de gluten.

13. Procédé selon l'une quelconque des revendications 10-12, dans lequel la matière de TFVP contient, calculé en masse de la matière sèche de la matière de TFVP, 0,5-10 % en masse d'amidon.

14. Procédé selon l'une quelconque des revendications 10-13, dans lequel la matière de TVP particulaire contient, calculé en masse de la matière sèche de la matière de TVP, au moins 50 % en masse de protéine de soja.

15. Procédé selon l'une quelconque des revendications 10-14, dans lequel pendant l'étape (c) les ingrédients de l'analogue de viande hachée sont maintenus à une température dans l'intervalle de -5°C à 30°C.
